# EUROPEAN PATENT APPLICATION

(11) **EP 4 040 555 A1**
(43) Date of publication of application: **10.08.2022**
(21) Application number: 20870775.2
(22) Date of filing: 18.08.2020
(51) Int. Cl.: H01M 10/052, H01M 10/0562, H01B 1/06, H01B 1/10, H01B 13/00

(54) **METHOD FOR PRODUCING SULFIDE-BASED INORGANIC SOLID ELECTROLYTE MATERIAL**

(30) Priority: 02.10.2019 JP 2019182311
(71) Applicant: Furukawa Co., Ltd., Chiyoda-ku Tokyo 100-8370 (JP)
(72) Inventor: YOSHIDA, Tatsushi, Tsukuba-shi, Ibaraki 305-0856 (JP)
(74) Representative: Müller, Christian Stefan Gerd
(86) International application number: PCT/JP2020/031134
(87) International publication number: WO 2021/065230

(57) **Abstract**

Provided is a method of manufacturing a sulfide-based inorganic solid electrolyte material, the method including: a step (A) of preparing a sulfide-based inorganic solid electrolyte material in a vitreous state; and a step (B) of annealing the sulfide-based inorganic solid electrolyte material in the vitreous state using a heating unit, in which the step (B) includes, in the following order, a step (B1) of disposing the sulfide-based inorganic solid electrolyte material in the vitreous state in a heating space, a step (B2) of annealing the sulfide-based inorganic solid electrolyte material in the vitreous state disposed in the heating space while increasing a temperature of the heating unit from an initial temperature T₀ to an annealing temperature T₁, and a step (B3) of annealing the sulfide-based inorganic solid electrolyte material in the vitreous state disposed in the heating space at the annealing temperature T₁, and a temperature increase rate from the initial temperature T₀ to the annealing temperature T₁ in the step (B2) is 2 °C/min or higher.

## Description

### TECHNICAL FIELD

The present invention relates to a method of manufacturing a sulfide-based inorganic solid electrolyte material.

### BACKGROUND ART

In general, a lithium ion battery is used as a power supply of a small mobile device such as a mobile phone or a laptop. In addition, recently, the lithium ion battery has been used not only as a power supply of a small mobile device but also as a power supply of an electric vehicle, an electric power storage, or the like.

In a currently commercially available lithium ion battery, an electrolytic solution including a combustible organic solvent is used. On the other hand, in a lithium ion battery (hereinafter, also referred to as "all-solid-state lithium ion battery") in which the electrolytic solution is replaced with a solid electrolyte such that the entire battery is made of a solid, a combustible organic solvent is not used in the battery. Therefore, it is considered that a safety device can be simplified and manufacturing costs or productivity is excellent. As a solid electrolyte material used for the solid electrolyte, for example, a sulfide-based solid electrolyte material is known.

For example, Patent Document 1 (Japanese Unexamined Patent Publication No. 2016-27545) describes a sulfide-based solid electrolyte material having a peak at a position of 2θ = 29.86° + 1.00° in X-ray diffraction measurement using a CuKα ray and a composition of Li_{2y+3}PS₄ (0.1 ≤ y ≤ 0.175).

### RELATED DOCUMENT

### PATENT DOCUMENT

[Patent Document 1] Japanese Unexamined Patent Publication No. 2016-27545

### SUMMARY OF THE INVENTION

### TECHNICAL PROBLEM

Incidentally, the sulfide-based inorganic solid electrolyte material has excellent electrochemical stability and lithium ionic conductivity. However, the sulfide-based inorganic solid electrolyte material still has lower lithium ionic conductivity than an electrolytic solution and is not sufficiently satisfactory as a solid electrolyte material.

Therefore, for the sulfide-based inorganic solid electrolyte material used for a lithium ion battery, further improvement of lithium ionic conductivity is required while maintaining electrochemical stability.

The present invention has been made under these circumstances, and an object thereof is to provide a sulfide-based inorganic solid electrolyte material having improved lithium ionic conductivity.

### SOLUTION TO PROBLEM

The present inventors conducted a thorough investigation in order to achieve the above-described object. As a result, the present inventors found that, by annealing a sulfide-based inorganic solid electrolyte material in a vitreous state under specific conditions, a sulfide-based inorganic solid electrolyte material having improved lithium ionic conductivity can be obtained, thereby completing the present invention.

According to the present invention,
there is provided a method of manufacturing a sulfide-based inorganic solid electrolyte material, the method including:
a step (A) of preparing a sulfide-based inorganic solid electrolyte material in a vitreous state; and
a step (B) of annealing the sulfide-based inorganic solid electrolyte material in the vitreous state using a heating unit,
in which the step (B) includes, in the following order, a step (B1) of disposing the sulfide-based inorganic solid electrolyte material in the vitreous state in a heating space, a step (B2) of annealing the sulfide-based inorganic solid electrolyte material in the vitreous state disposed in the heating space while increasing a temperature of the heating unit from an initial temperature T₀ to an annealing temperature T₁, and a step (B3) of annealing the sulfide-based inorganic solid electrolyte material in the vitreous state disposed in the heating space at the annealing temperature T₁, and
a temperature increase rate from the initial temperature T₀ to the annealing temperature T₁ in the step (B2) is 2 °C/min or higher.

### ADVANTAGEOUS EFFECTS OF INVENTION

With the present invention, a sulfide-based inorganic solid electrolyte material having improved lithium ionic conductivity can be provided.

### DESCRIPTION OF EMBODIMENTS

Hereinafter, an embodiment of the present invention will be described. Unless specified otherwise, a numerical range "A to B" represents A or more and B or less.

A method of manufacturing the sulfide-based inorganic solid electrolyte material according to the present embodiment includes: a step (A) of preparing a sulfide-based inorganic solid electrolyte material in a vitreous state; and a step (B) of annealing the sulfide-based inorganic solid electrolyte material in the vitreous state using a heating unit, in which the step (B) includes, in the following order, a step (B1) of disposing the sulfide-based inorganic solid electrolyte material in the vitreous state in a heating space, a step (B2) of annealing the sulfide-based inorganic solid electrolyte material in the vitreous state disposed in the heating space while increasing a temperature of the heating unit from an initial temperature T₀ to an annealing temperature T₁, and a step (B3) of annealing the sulfide-based inorganic solid electrolyte material in the vitreous state disposed in the heating space at the annealing temperature T₁, and a temperature increase rate from the initial temperature T₀ to the annealing temperature T₁ in the step (B2) is 2 °C/min or higher.

In the method of manufacturing the sulfide-based inorganic solid electrolyte material according to the present embodiment, a sulfide-based inorganic solid electrolyte material having improved lithium ionic conductivity can be obtained.

The sulfide-based inorganic solid electrolyte material obtained using the method of manufacturing the sulfide-based inorganic solid electrolyte material according to the present embodiment includes Li, P, and S as constituent elements.

In addition, from the viewpoint of further improving the lithium ionic conductivity, the electrochemical stability, and the stability and the handling properties of the sulfide-based inorganic solid electrolyte material according to the present embodiment in water or air, a molar ratio (Li/P) of a content of Li to a content of P in the sulfide-based inorganic solid electrolyte material is preferably 1.0 or higher and 10.0 or lower, more preferably 1.0 or higher and 5.0 or lower, still more preferably 2.0 or higher and 4.5 or lower, still more preferably 3. 0 or higher and 4.2 or lower, still more preferably 3.1 or higher and 4.0 or lower, and still more preferably 3.2 or higher and 3.8 or lower.

In addition, a molar ratio S/P of a content of S to the content of P is preferably 1.0 or higher and 10.0 or lower, more preferably 2.0 or higher and 6.0 or lower, still more preferably 3.0 or higher and 5.0 or lower, still more preferably 3 .5 or higher and 4.5 or lower, and still more preferably 3.8 or higher and 4.2 or lower.

Here, the contents of Li, P, and S in the sulfide-based inorganic solid electrolyte material according to the present embodiment can be obtained by, for example, ICP Emission Spectroscopy or X-ray analysis.

The sulfide-based inorganic solid electrolyte material according to the present embodiment can be used for any application where lithium ionic conductivity is required. In particular, it is preferable that the sulfide-based inorganic solid electrolyte material according to the present embodiment is used for a lithium ion battery. More specifically, the sulfide-based inorganic solid electrolyte material according to the present embodiment is used for a positive electrode active material layer, a negative electrode active material layer, an electrolyte layer, or the like in a lithium ion battery. Further, the sulfide-based inorganic solid electrolyte material according to the present embodiment is suitably used for a positive electrode active material layer, a negative electrode active material layer, a solid electrolyte layer, or the like forming an all-solid-state lithium ion battery, and is more suitably used for a solid electrolyte layer forming an all-solid-state lithium ion battery.

Examples of the all-solid-state lithium ion battery to which the sulfide-based inorganic solid electrolyte material according to the present embodiment is applied include an all-solid-state lithium ion battery in which a positive electrode, a solid electrolyte layer, and a negative electrode are stacked in this order.

Hereinafter, each of the steps will be described in detail.

### (Step (A))

First, a sulfide-based inorganic solid electrolyte material in a vitreous state is prepared.

The sulfide-based inorganic solid electrolyte material in the vitreous state can be obtained, for example, by preparing a mixture including lithium sulfide and phosphorus sulfide and mechanical processing this mixture such that the lithium sulfide and the phosphorus sulfide as raw materials are vitrified in a chemical reaction.

The mixture including lithium sulfide and phosphorus sulfide can be obtained, for example, by mixing the respective raw materials at a predetermined molar ratio such that the target sulfide-based inorganic solid electrolyte material has a desired composition ratio.

Here, the mixing ratio between the respective raw materials in the mixture is adjusted such that the obtained sulfide-based inorganic solid electrolyte material has a desired composition ratio.

A method of mixing the respective raw materials is not particularly limited as long as it is a mixing method capable of uniformly mixing the respective raw materials. For example, the raw materials can be mixed using a ball mill, a beads mill, a vibrating mill, an impact crushing device, a mixer (for example, a pug mixer, a ribbon mixer, a tumbler mixer, a drum mixer, or a V-type mixer), a kneader, a twin-screw kneader, an air flow grinder, or the like.

Mixing conditions such as a stirring rate, a processing time, a temperature, a reaction pressure, or a gravitational acceleration applied to the mixture during the mixing of the respective raw materials can be appropriately determined depending on the amount of the mixture processed.

The lithium sulfide used as a raw material is not particularly limited, and a commercially available lithium sulfide may be used. For example, lithium sulfide obtained by reaction of lithium hydroxide and hydrogen sulfide may also be used. From the viewpoint of obtaining the high-purity sulfide-based inorganic solid electrolyte material and suppressing a side reaction, it is preferable that lithium sulfide having little impurities is used.

Here, in the present embodiment, examples of the lithium sulfide include lithium polysulfide. As the lithium sulfide, Li₂S is preferable.

The phosphorus sulfide used as a raw material is not particularly limited. For example, commercially available phosphorus sulfide (for example, P₂S₅, P₄S₃, P₄S₇, or P₄S₅) can be used. From the viewpoint of obtaining the high-purity sulfide-based inorganic solid electrolyte material and suppressing a side reaction, it is preferable that phosphorus sulfide having little impurities is used. As the phosphorus sulfide, P₂S₅ is preferable.

Lithium nitride may be further used as a raw material. Here, Nitrogen in the lithium nitride is discharged into the system as N₂. Therefore, by using lithium nitride as a raw material, only the Li composition can be increased with respect to the sulfide-based inorganic solid electrolyte material including Li, P, and S as constituent elements.

The lithium nitride according to the present embodiment is not particularly limited, and a commercially available lithium nitride (for example, Li₃N) may be used. For example, lithium nitride obtained by reaction of metallic lithium (for example, Li foil) and nitrogen gas may also be used. From the viewpoint of obtaining the high-purity solid electrolyte material and suppressing a side reaction, it is preferable that lithium nitride having little impurities is used.

Next, the sulfide-based inorganic solid electrolyte material in the vitreous state is obtained by mechanically processing the mixture including lithium sulfide and phosphorus sulfide such that the lithium sulfide and the phosphorus sulfide as raw materials are vitrified in a chemical reaction.

Here, the mechanical process refers to a process of causing two or more kinds of inorganic compounds to mechanically collide with each other to be vitrified in a chemical reaction, for example, a mechanochemical process.

In addition, from the viewpoint of realizing an environment where water or oxygen is removed at a high level in the vitrification step, it is preferable that the mechanical process is performed in a dry condition, and it is more preferable that the mechanical process is a dry mechanochemical process.

By using the mechanochemical process, the respective raw materials can be mixed while crushing the raw materials into fine particles. Therefore, the contact area of the respective raw materials can be increased. As a result, the reaction of the respective raw materials can be accelerated. The sulfide-based inorganic solid electrolyte material in the vitreous state can be obtained with higher efficiency.

Here, the mechanochemical process refers to a method of vitrifying a target composition while applying a mechanical energy such as a shear force, an impact force, or a centrifugal force thereto. Examples of a device for performing the vitrification through the mechanochemical process include: a crusher and disperser such as a ball mill, a beads mill, a vibrating mill, a turbo mill, a mechano-fusion, a disc mill, or a roll mill; a rotation and impact crushing device including a mechanism as a combination of rotation (shearing stress) and impact (compressive stress) represented by a rock drill, a vibration drill, or an impact driver; and a high-pressure grinding roll. In particular, from the viewpoint of efficiently generating a very high impact energy, a ball mill or a beads mill is preferable, and a ball mill is more preferable. In addition, from the viewpoint of obtaining excellent continuous productivity, for example, a roll mill; a rotation and impact crushing device including a mechanism as a combination of rotation (shearing stress) and impact (compressive stress) represented by a rock drill, a vibration drill, or an impact driver; or a high-pressure grinding roll is preferable.

In addition, it is preferable that the mechanochemical process is performed in an inert atmosphere. As a result, a reaction of the sulfide-based inorganic solid electrolyte material with water vapor, oxygen, or the like can be suppressed.

In addition, the inert atmosphere refers to a vacuum atmosphere or an inert gas atmosphere. In the inert atmosphere, in order to avoid contact with water, the dew point is preferably -50°C or lower and more preferably -60°C or lower. The inert gas atmosphere refers to an atmosphere of inert gas such as argon gas, helium gas, or nitrogen gas. In order to prevent impurities from being mixed in a product, it is preferable that the purity of the inert gas is as high as possible. A method of introducing the inert gas into the mixed system is not particularly limited as long as it is a method capable of filling the mixed system with the inert gas atmosphere. Examples of the introduction method include a method of purging inert gas and a method continuously introducing inert gas at a given flow rate.

Mixing conditions such as a rotation speed, a processing time, a temperature, a reaction pressure, or a gravitational acceleration applied to the mixture during the mechanical process of the mixture including lithium sulfide and phosphorus sulfide can be appropriately determined depending on the kind of the mixture or the amount thereof processed. In general, as the rotation speed increases, the glass production rate increases, and as the processing time increases, the glass conversion rate increases.

Typically, when X-ray diffraction analysis is performed using CuKα rays as a radiation source, if a diffraction peak derived from the raw material is lost or decreases, it can be determined that the mixture is vitrified and a sulfide-based inorganic solid electrolyte material in a vitreous state is obtained.

Here, in the step of vitrifying the mixture including lithium sulfide and phosphorus sulfide, it is preferable that the mechanical process is performed until the lithium ionic conductivity measured using an alternating current impedance method under measurement conditions of 27.0°C, an applied voltage of 10 mV, and a measurement frequency range of 0.1 Hz to 7 MHz is preferably 0.5 × 10⁻⁴ S·cm⁻¹ or higher and preferably 1.0 × 10⁻⁴ S·cm⁻¹ or higher. As a result, a sulfide-based inorganic solid electrolyte material having further improved lithium ionic conductivity can be obtained.

### (Step (B))

Next, the sulfide-based inorganic solid electrolyte material in the vitreous state is annealed using a heating unit.

In the method of manufacturing the sulfide-based inorganic solid electrolyte material according to the present embodiment, by annealing the sulfide-based inorganic solid electrolyte material in the vitreous state, at least a part of the sulfide-based inorganic solid electrolyte material in the vitreous state can be crystallized. That is, by heating the sulfide-based inorganic solid electrolyte material in the vitreous state, at least a part of the sulfide-based inorganic solid electrolyte material in the vitreous state is crystallize such that a sulfide-based inorganic solid electrolyte material in a glass ceramic state (also referred to as "crystallized glass") can be obtained. As a result, the lithium ionic conductivity of the obtained sulfide-based inorganic solid electrolyte material can be further improved.

The step (B) includes, in the following order, a step (B1) of disposing the sulfide-based inorganic solid electrolyte material in the vitreous state in a heating space, a step (B2) of annealing the sulfide-based inorganic solid electrolyte material in the vitreous state disposed in the heating space while increasing a temperature of the heating unit from an initial temperature T₀ to an annealing temperature T₁, and a step (B3) of annealing the sulfide-based inorganic solid electrolyte material in the vitreous state disposed in the heating space at the annealing temperature T₁, and a temperature increase rate from the initial temperature T₀ to the annealing temperature T₁ in the step (B2) is 2 °C/min or higher, preferably 3 °C/min or higher, more preferably 5 °C/min or higher, and still more preferably 7 °C/min or higher. The upper limit value of the temperature increase rate is not particularly limited and may be, for example, 1000 °C/min or lower, 800 °C/min or lower, or 600 °C/min or lower.

By setting the temperature increase rate in the step (B2) to be the lower limit value or higher, the lithium ionic conductivity of the obtained sulfide-based inorganic solid electrolyte material in the glass ceramic state can be improved. The reason for this is not clear but is presumed to be as follows.

First, it is presumed that, when the temperature increase rate is the lower limit value or higher, the formation of crystal nuclei is suppressed, and a sulfide-based inorganic solid electrolyte material in a glass ceramic state having a small number of grain boundaries can be obtained. It is presumed that, as the number of grain boundaries decreases, the resistance of the grain boundaries is reduced and the lithium ionic conductivity is improved.

It is presumed that, due to the above-described reasons, by setting the temperature increase rate to be the lower limit value or higher, a sulfide-based inorganic solid electrolyte material in a glass ceramic state having improved lithium ionic conductivity can be obtained.

Examples of the heating unit include convective heat transfer heating, conductive heat transfer heating, and radiant heat transfer heating. These heating units may be used alone or in combination of two or more types.

The conductive heat transfer heating is a method of bringing the sulfide-based inorganic solid electrolyte material into contact with a high temperature body to heat the sulfide-based inorganic solid electrolyte material by heat transfer, and examples of a device for performing conductive heat transfer heating include a hot plate type heater, a heating roll, and a carbon crucible. Here, the conductive heat transfer heating by the carbon crucible is a method including: putting the sulfide-based inorganic solid electrolyte material into the carbon crucible; heating the carbon crucible using an infrared heater, an infrared lamp, or the like; and heating the sulfide-based inorganic solid electrolyte material using the heat of the heated carbon crucible.

The radiant heat transfer heating is a method of heating the sulfide-based inorganic solid electrolyte material by making a lithium member to absorb energy radiating from a high temperature body as electromagnetic waves, and examples of a device for performing radiant heat transfer heating include an infrared heater and an infrared lamp.

From the viewpoint that the sulfide-based inorganic solid electrolyte material can be effectively annealed within a short period of time, conductive heat transfer heating is preferable.

The initial temperature T0 is a temperature of the heating unit when the sulfide-based inorganic solid electrolyte material in the vitreous state is disposed in the heating space, and is, for example, 0°C or higher and 100°C or lower, and preferably 10°C or higher and 50°C or lower, and more preferably 15°C or higher and 40°C or lower.

Here, in the method of manufacturing the sulfide-based inorganic solid electrolyte material according to the present embodiment, an aspect where, after the heating space reaches the annealing temperature T1, the sulfide-based inorganic solid electrolyte material in the vitreous state is disposed in the heating space for annealing is excluded.

The annealing temperature T₁ is not particularly limited as long as it is a temperature at which crystallization can be sufficiently accelerated. For example, from the viewpoint of effectively accelerating crystallization while suppressing thermal decomposition or the like of the sulfide-based inorganic solid electrolyte material in the vitreous state, the annealing temperature T₁ is preferably in a range of 220°C or higher and 500°C or lower, more preferably in a range of 230°C or higher and 400°C or lower, still more preferably in a range of 240°C or higher and 350°C or lower, and still more preferably in a range of 250°C or higher and 350°C or lower.

Here, the initial temperature T₀ and the annealing temperature T₁ are temperatures of the heating unit, are temperature of an atmosphere of the heating space in the case of convective heat transfer heating and radiant heat transfer heating, and are surface temperatures of the high temperature body in the case of conductive heat transfer heating.

The total time for which the annealing process is performed in the step (B2) and the step (B3) is not particularly limited as long as it is the time for which the desired sulfide-based inorganic solid electrolyte material in the glass ceramic state can be obtained. For example, the time is in a range of 1 hour or longer and 24 hours or shorter, preferably 0.5 hours or longer and 8 hours or shorter, and more preferably 1 hour or longer and 3 hours or shorter. Conditions such as a temperature or a time during the annealing process can be appropriately adjusted in order to optimize properties of the sulfide-based inorganic solid electrolyte material.

In the method of manufacturing the sulfide-based inorganic solid electrolyte material according to the present embodiment, it is preferable that the heating space in at least the step (B2) and the step (B3) is an inert gas atmosphere. As a result, deterioration (for example, oxidation) of the sulfide-based inorganic solid electrolyte material can be prevented.

Examples of the inert gas to be used include argon gas, helium gas, and nitrogen gas. In order to prevent impurities from being mixed in a product, it is preferable that the purity of the inert gas is as high as possible. In addition, in order to avoid contact with water, the dew point is preferably -30°C or lower, more preferably -50°C or lower, and still more preferably -60°C or lower. A method of introducing the inert gas into the heating space is not particularly limited as long as it is a method capable of filling the heating space with the inert gas atmosphere. Examples of the introduction method include a method of purging inert gas and a method continuously introducing inert gas at a given flow rate.

In addition, whether or not at least a part of the sulfide-based inorganic solid electrolyte material is crystallized can be determined based on, for example, whether or not a new crystal peak is formed in a spectrum obtained by X-ray diffraction in which a CuKα ray is used as a radiation source.

### (Step of Crushing, Classifying, or Granulating)

In the method of manufacturing the sulfide-based inorganic solid electrolyte material according to the present embodiment, optionally, the step of crushing, classifying, or granulating the obtained sulfide-based inorganic solid electrolyte material may be further performed. For example, by crushing the sulfide-based inorganic solid electrolyte material into fine particles and adjusting the particle size thereof through a classification operation or a granulation operation, a sulfide-based inorganic solid electrolyte material having a desired particle size can be obtained. The above-described crushing method is not particularly limited, and a well-known crushing method such as a mixer, an air flow grinder, a mortar, a tumbling mill, or a coffee mill can be used. In addition, the above-described classification method is not particularly limited, and a well-known method such as a sieve can be used.

From the viewpoint of avoiding contact with water in air, it is preferable that crushing or classification is performed in an inert gas atmosphere or a vacuum atmosphere.

Hereinafter, the embodiment of the present invention has been described. However, the embodiment is merely an example of the present invention, and various configurations other than the above-described configurations can also be adopted.

In addition, the present invention is not limited to the above-described embodiments, and modifications, improvements, and the like within a range where the object of the present invention can be achieved are included in the present invention.

### [Examples]

Hereinafter, the present invention will be described in more detail using Examples and Comparative Examples. However, the present invention is not limited to these Examples and Comparative Examples.

### <Evaluation Method>

First, an evaluation method in the following Examples and Comparative Examples will be described.

### (1) Measurement of Lithium Ionic Conductivity

In each of the sulfide-based inorganic solid electrolyte material obtained in each of Examples and Comparative Examples, the lithium ionic conductivity was measured using an alternating current impedance method.

For the measurement of the lithium ionic conductivity, a potentiostat/galvanostat SP-300 (manufactured by Bio-Logic Sciences Instruments) was used. The size of the sample was diameter: 9.5 mm and thickness: 1.2 to 2.0 mm. Measurement conditions were applied voltage: 10 mV, measurement temperature: 27.0°C, and measurement frequency range: 0.1 Hz to 7MHz, and electrode: Li foil.

Here, 150 mg of the powdery sulfide-based inorganic solid electrolyte material obtained in each of Examples and Comparative Examples was pressed using a press machine at 270 MPa for 10 minutes, and the plate-shaped sulfide-based inorganic solid electrolyte material having a diameter of 9.5 mm and a thickness of 1.2 to 2.0 mm was obtained and used as the sample for the measurement of the lithium ionic conductivity.

### (2) Measurement of Composition Ratio in Sulfide-Based Inorganic Solid Electrolyte Material

Mass% of each of Li, P, and S in the sulfide-based inorganic solid electrolyte material obtained in each of Examples and Comparative Examples was obtained by ICPEmission Spectroscopy using an ICP emission spectrometer (SPS3000, manufactured by Seiko Instruments Inc.). Based on the obtained values, a molar ratio between the respective elements was calculated.

### <Example 1>

### (1) Preparation of Sulfide-Based Inorganic Solid Electrolyte Material

The sulfide-based inorganic solid electrolyte material was prepared according to the following procedure.

Regarding the raw materials, Li₂S (manufactured by Furukawa Co. , Ltd. , purity: 99.9%), P₂S₅ (manufactured by Kanto Chemical Co., Inc.), and Li₃N (manufactured by Furukawa Co., Ltd.) were used.

First, a rotary blade crusher and an alumina pot (inner volume: 400 mL) were disposed in the glove box. Next, injection and evacuation of high-purity dry argon gas (H₂O < 1 ppm, O₂< 1 ppm) obtained by a gas purification device were performed three times in the glove box.

Next, using the rotary blade crusher (rotation speed: 18000 rpm), 5 g in total of Li₂S powder, P₂S₅ powder, and Li₃N powder (Li₂S:P₂S₅:Li₃N = 71.1:23.7:5.3 (mol%)) were mixed (an operation of mixing the powders for 10 seconds and leaving the powders to stand for 10 seconds was performed 10 times (cumulative mixing time: 100 seconds) in the glove box. As a result, a raw material inorganic composition was prepared.

Next, Next, the raw material inorganic composition and 500 g of ZrO₂ balls having a diameter of 10 mm were put into the alumina pot (inner volume: 400 mL) in the glove box, and the pot was sealed.

Next, the alumina pot was taken out from the glove box, the alumina pot was attached to a ball mill placed in an atmosphere of dry air introduced through a membrane air dryer, and a mechanochemical process was performed at 120 rpm for 500 hours such that the raw material inorganic composition was vitrified. Whenever the powders were mixed for 48 hours, the powder was scraped off from the inner wall of the pot in the glove box. After sealing the pot, milling was continued in a dry atmosphere.

Next, the alumina pot was put into the glove box, the obtained powder (0.35 g) was transported from the alumina pot to a carbon crucible, the carbon crucible was heated using a desktop heating device provided in the glove box, and the carbon crucible was heated to 260°C. Here, the initial temperature T0 of the carbon crucible was 23°C, and the temperature increase rate was 9 °C/min. The annealing process was performed for 2 hours from the start of heating of the carbon crucible. The temperature of the carbon crucible was measured in a state where a bottom side of the outside of the carbon crucible was in contact with a thermocouple.

Each of the obtained sulfide-based inorganic solid electrolyte materials (Li₁₀P₃S₁₂) in the glass ceramic state was evaluated. The obtained results are shown in Table 1.

### <Examples 2 to 4 and Comparative Example 1>

Each of sulfide-based inorganic solid electrolyte materials (Li₁₀P₃S₁₂) in the glass ceramic state was prepared using the same method as that of Example 1, except that the temperature increase rate of the carbon crucible was changed as shown in Table 1. The lithium ionic conductivity of each of the obtained sulfide-based inorganic solid electrolyte materials in the glass ceramic state was measured. The obtained results are shown in Table 1.

### <Examples 5 and 6>

Each of sulfide-based inorganic solid electrolyte materials (Li₁₀P₃S₁₂) in the glass ceramic state was prepared using the same method as that of Example 1, except that the temperature increase rate of the carbon crucible and the annealing temperature were changed as shown in Table 1. The lithium ionic conductivity of each of the obtained sulfide-based inorganic solid electrolyte materials in the glass ceramic state was measured. The obtained results are shown in Table 1.

**[Table 1]**

| | Annealing Conditions | | | Properties of Sulfide-Based Inorganic Solid Electrolyte Material | | |
|---|---|---|---|---|---|---|
| | Annealing Temperature [°C] | Temperature Increase Rate [°C/min] | Annealing Time [h] | Composition Ratio | | Lithium Ionic Conductivity |
| | | | | Li/P [-] | S/P [-] | |
| Example 1 | 260 | 9 | 2 | 3.3 | 4.0 | 1.25 × 10⁻³ |
| Example 2 | 260 | 13 | 2 | 3.3 | 4.0 | 1.23 × 10⁻³ |
| Example 3 | 260 | 130 | 2 | 3.3 | 4.0 | 1.20 × 10⁻³ |
| Example 4 | 260 | 520 | 2 | 3.3 | 4.0 | 1.24 × 10⁻³ |
| Example 5 | 290 | 10 | 2 | 3.3 | 4.0 | 1.20 × 10⁻³ |
| Example 6 | 290 | 145 | 2 | 3.3 | 4.0 | 1.24 × 10⁻³ |
| Comparative Example 1 | 260 | 1 | 2 | 3.3 | 4.0 | 1.01 × 10⁻³ |

It can be understood that, with the method of manufacturing the sulfide-based inorganic solid electrolyte material according to Examples where the temperature increase rate was 2 °C/min or higher, the sulfide-based inorganic solid electrolyte material having a high ionic conductivity was able to be obtained within a short period of time.

It can be understood from the above-described results that, with the method of manufacturing the sulfide-based inorganic solid electrolyte material according to the present embodiment, a sulfide-based inorganic solid electrolyte material having improved lithium ionic conductivity can be obtained.

The present application claims priority based on Japanese Patent Application No. 2019-182311 filed on October 2, 2019, the entire content of which is incorporated herein by reference.

## Claims

1. A method of manufacturing a sulfide-based inorganic solid electrolyte material, the method comprising:
a step (A) of preparing a sulfide-based inorganic solid electrolyte material in a vitreous state; and
a step (B) of annealing the sulfide-based inorganic solid electrolyte material in the vitreous state using a heating unit,
wherein the step (B) includes, in the following order, a step (B1) of disposing the sulfide-based inorganic solid electrolyte material in the vitreous state in a heating space, a step (B2) of annealing the sulfide-based inorganic solid electrolyte material in the vitreous state disposed in the heating space while increasing a temperature of the heating unit from an initial temperature T₀ to an annealing temperature T₁, and a step (B3) of annealing the sulfide-based inorganic solid electrolyte material in the vitreous state disposed in the heating space at the annealing temperature T₁, and
a temperature increase rate from the initial temperature T₀ to the annealing temperature T₁ in the step (B2) is 2 °C/min or higher.

2. The method of manufacturing a sulfide-based inorganic solid electrolyte material according to claim 1,
wherein the heating space in the step (B2) and the step (B3) is an inert gas atmosphere.

3. The method of manufacturing a sulfide-based inorganic solid electrolyte material according to claim 1 or 2,
wherein the annealing temperature T₁ is 220°C or higher and 500°C or lower.

4. The method of manufacturing a sulfide-based inorganic solid electrolyte material according to any one of claims 1 to 3,
wherein the initial temperature T₀ is 0°C or higher and 100°C or lower.

5. The method of manufacturing a sulfide-based inorganic solid electrolyte material according to any one of claims 1 to 4,
wherein the heating unit includes conductive heat transfer heating.

6. The method of manufacturing a sulfide-based inorganic solid electrolyte material according to any one of claims 1 to 5,
wherein the sulfide-based inorganic solid electrolyte material includes Li, P, and S as constituent elements.

7. The method of manufacturing a sulfide-based inorganic solid electrolyte material according to claim 6,
wherein a molar ratio (Li/P) of a content of Li to a content of P in the sulfide-based inorganic solid electrolyte material is 1.0 or higher and 10.0 or lower, and a molar ratio (S/P) of a content of S to the content of P in the sulfide-based inorganic solid electrolyte material is 1.0 or higher and 10.0 or lower.
